# EUROPÄISCHE PATENTSCHRIFT

(11) **EP 3 529 527 B1**
(45) Veröffentlichungstag und Bekanntmachung des Hinweises auf die Patenterteilung: **07.10.2020**
(21) Anmeldenummer: 17811825.3
(22) Anmeldetag: 18.10.2017
(51) Int. Cl.: F16L 37/088, F02M 35/10, F16J 15/02, F16J 15/3204

(54) **STECKKUPPLUNGSDICHTUNG FÜR EINE MEDIENLEITUNG EINES ANTRIEBSMOTORS**
PLUG-IN COUPLING SEAL FOR A FLUID LINE OF A DRIVE MOTOR
JOINT D'ACCOUPLEMENT PAR EMBOÎTEMENT POUR UNE CONDUITE DE FLUIDE D'UN MOTEUR D'ENTRAÎNEMENT

(30) Priorität: 20.10.2016 AT 509532016
(43) Veröffentlichungstag der Anmeldung: 28.08.2019
(73) Patentinhaber: Henn GmbH & Co KG., 6850 Dornbirn (AT)
(72) Erfinder: BALDREICH, Wolfgang, 6850 Dornbirn (AT)
(74) Vertreter: Burger, Hannes
(86) Internationale Anmeldenummer: PCT/AT2017/060269
(87) Internationale Veröffentlichungsnummer: WO 2018/071937

(56) Entgegenhaltungen:
- WO-A1-2005/103551
- GB-A- 2 296 070
- JP-A- H08 184 377
- JP-U- S63 178 669

## Beschreibung

Die Erfindung betrifft eine Steckkupplungsdichtung für eine Medienleitung eines Antriebsmotors.

Aus der AT 12 491 U1 und der AT 14 083 U1 sind Dichtungen für eine Steckkupplung in einem Luftansaugstrang eines Verbrennungsmotors bekannt.

Die aus der AT 12 491 U1 und der AT 14 083 U1 bekannten Dichtungen weisen den Nachteil auf, dass die Kupplungsteile, mit welchen die Dichtung zusammenwirkt nur unter Aufbringung einer hohen Axialkraft fügbar sind.

Aus der GB 2 296 070 A, der JP H08 184377 A, der JP S63 178669 U sind Dichtungen mit Mikrostrukturen gemäss dem Oberbegriff des Anspruchs 1 bekannt. Aus der WO 2005/103551 A1 ist eine weitere Dichtung bekannt.

Aufgabe der vorliegenden Erfindung war es, die Nachteile des Standes der Technik zu überwinden und eine Steckkupplungsdichtung zur Verfügung zu stellen, welche einfach zu fügen ist.

Diese Aufgabe wird durch eine Vorrichtung gemäß den Ansprüchen gelöst.

Erfindungsgemäß ist eine Steckkupplungsdichtung für eine Medienleitung, insbesondere für einen Luftansaugstrang eines Antriebsmotors ausgebildet. Die ist Steckkupplungsdichtung zur Aufnahme zwischen einem ersten Kupplungsteil und einem in Einsteckrichtung in das erste Kupplungsteil einzuschiebende zweite Kupplungsteil ausgebildet. Die Steckkupplungsdichtung weist eine Anlagefläche auf, welche zur Anlage am ersten Kupplungsteil und/oder am zweiten Kupplungsteil ausgebildet ist. An der Anlagefläche ist zumindest bereichsweise eine Mikrostrukturierung mit vorstehenden Strukturierungselementen zur Reduktion des Fügewiderstandes der beiden Kupplungsteile ausgebildet.

Von Vorteil an der erfindungsgemäßen Steckkupplungsdichtung ist, dass durch die Mikrostrukturierung überraschenderweise die Reibung an der innenliegenden Oberfläche der Stecckupplungsdichtung vermindert werden kann und dadurch der Einsteckwiderstand des zweiten Kupplungsteils in die Steckkupplungsdichtung vermindert werden kann. Darüber hinaus kann durch die Mikrostrukturierung die Dichtwirkung der Steckkupplungsdichtung verbessert werden.

Insbesondere kann vorgesehen sein, dass an der Steckkupplungsdichtung eine außenliegende Oberfläche zur Aufnahme in einem ersten Kupplungsteil ausgebildet ist und eine innenliegende Oberfläche zur Anlage an einem in Einsteckrichtung in das erste Kupplungsteil einzuschiebende zweiten Kupplungsteil ausgebildet ist, wobei an der innenliegenden Oberfläche die Mikrostrukturierung mit den vorstehenden Strukturierungselementen zur Reduktion des Fügewiderstandes der beiden Kupplungsteile ausgebildet ist. Besonders bei derartig ausgebildeten Steckkupplungsdichtungen kann es vorteilhaft sein, wenn die notwendige Fügekraft reduziert werden kann.

Weiters kann es zweckmäßig sein, wenn die vorstehenden Strukturierungselemente der Mikrostrukturierung in Form von mehreren zumindest teilweise, insbesondere vollumfänglich, umlaufenden Rippen gebildet sind. Von Vorteil ist hierbei, dass derartige vollumfänglich umlaufende Rippen die oben beschriebenen Eigenschaften der Steckkupplungsdichtung besonders verbessern.

Ferner kann vorgesehen sein, dass die vorstehenden Strukturierungselemente eine Höhe zwischen 10µm und 900µm, insbesondere zwischen 40µm und 400µm, bevorzugt zwischen 80µm und 200µm aufweisen. Überraschend ist hierbei, dass besonders Strukturierungselemente mit einer derartigen Höhe eine besonders gute Gleiteigenschaft aufweisen.

Darüber hinaus kann vorgesehen sein, dass zwischen den vorstehenden Strukturierungselementen ein Freiraum zwischen 10µm und 900µm, insbesondere zwischen 40µm und 400µm, bevorzugt zwischen 100µm und 200µm ausgebildet ist. Überraschend ist hierbei, dass Strukturierungselemente mit einem derartigen Freiraum eine besonders gute Gleiteigenschaft aufweisen.

Vorteilhaft ist auch eine Ausprägung, gemäß welcher vorgesehen sein kann, dass die vorstehenden Strukturierungselemente eine Breite zwischen 5µm und 300µm, insbesondere zwischen 10µm und 200µm, bevorzugt zwischen 30µm und 100µm aufweisen. Überraschend ist hierbei, dass Strukturierungselemente mit einer derartigen Breite eine besonders gute Gleiteigenschaft aufweisen.

Gemäß einer Weiterbildung ist es möglich, dass die vorstehenden Strukturierungselemente in Einsteckrichtung gebogen ausgebildet sind. Mit anderen Worten ausgedrückt kann vorgesehen sein, dass ein Kopfbereich der Strukturierungselemente weiter in Einsteckrichtung verlagert ist, als ein Fußbereich der Strukturierungselemente. Von Vorteil ist hierbei, dass dadurch die Gleiteigenschaften der Mikrostrukturierung weiter verbessert werden.

Ferner kann es zweckmäßig sein, wenn zwischen den vorstehenden Strukturierungselementen ein Gleitmittel angeordnet ist. Von Vorteil ist hierbei, dass mittels dem Gleitmittel die Fügbarkeit der Steckkupplungsdichtung weiter verbessert werden kann.

Darüber hinaus kann vorgesehen sein, dass mehrere vorstehende Strukturierungselemente wellenartig hintereinander angeordnet sind. Von Vorteil ist hierbei, dass durch das Vorsehen von mehreren Strukturierungselementen die Gleiteigenschaft der Mikrostrukturierung weiter verbessert werden kann.

Weiters kann vorgesehen sein, dass die innenliegende Oberfläche der Steckkupplungsdichtung, an welcher die vorstehenden Strukturierungselemente angeordnet sind sich zwischen einem ersten Längsende der Steckkupplungsdichtung mit einem ersten Durchmesser und einem zweiten Längsende der Steckkupplungsdichtung mit einem zweiten Durchmesser erstreckt, wobei der zweite Durchmesser kleiner ist als der erste Durchmesser und an der innenliegenden Oberfläche ein Übergangsradius ausgebildet ist, welcher sich zwischen dem ersten Längsende der Steckkupplungsdichtung und dem zweiten Längsende der Steckkupplungsdichtung erstreckt. Durch diese Maßnahme wird das Einstecken des zweiten Kupplungsteiles in die Steckkupplungsdichtung weiter verbessert.

Ferner kann vorgesehen sein, dass an der Anlagefläche eine Beschichtung ausgebildet ist, durch welche das Gleitverhalten der Mikrostrukturierung weiter verbessert werden kann.

Darüber hinaus kann vorgesehen sein, dass in der Steckkupplungsdichtung Hohlräume ausgebildet sind in welchen ein Gleitmittel angeordnet ist. Die Hohlräume können beispielsweise im Material der Steckkupplungsdichtung ausgebildet sein. Insbesondere kann vorgesehen sein, dass die Hohlräume beispielsweise in Form von Poren ausgebildet sind, in welchen das Gleitmittel angeordnet ist. Beim Quetschen der Steckkupplungsdichtung während dem Fügen der Kupplungsteile können die Hohlräume zusammengedrückt werden und dabei das Gleitmittel freigeben.

In einer ersten Ausführungsvariante kann vorgesehen sein, dass die Hohlräume in Form von Kapillaren ausgebildet sind, welche zur Oberfläche hin offen sind. In einer zweiten Ausführungsvariante kann vorgesehen sein, dass die Hohlräume in Form von geschlossenen Kammern oder Poren ausgebildet sind, welche beim Ausüben von Druck aufplatzen.

Weiters ist ein Kraftfahrzeug umfassend: einen Antriebsmotor, einen Luftansaugstrang des Antriebsmotors und eine Steckkupplung im Luftansaugstrang des Antriebsmotors ausgebildet, wobei die Steckkupplung ein erstes Kupplungsteil mit einer darin aufgenommenen Stecckupplungsdichtung und ein in das erste Kupplungsteil eingestecktes zweites Kupplungsteil aufweist. Die Steckkupplungsdichtung ist nach einem der vorhergehenden Ansprüche ausgebildet.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines ersten Ausführungsbeispiels einer Steckkupplungsdichtung;
- Fig. 2: eine Schnittdarstellung der Steckkupplungsdichtung gemäß der Schnittlinie II-II in Fig. 1;
- Fig. 3: eine Schnittdarstellung einer in einem ersten Kupplungsteil aufgenommenen Steckkupplungsdichtung;
- Fig. 4: eine Schnittdarstellung einer in einem ersten Kupplungsteil aufgenommenen Steckkupplungsdichtung, wobei ein zweites Kupplungsteil mit dem ersten Kupplungsteil gefügt ist;
- Fig. 5: eine schematische Detailansicht in Schnittdarstellung einer innenliegenden Oberfläche der Steckkupplungsdichtung;
- Fig. 6: eine schematische Detailansicht in Schnittdarstellung der innenliegenden Oberfläche der Steckkupplungsdichtung, wobei das zweite Kupplungsteil teilweise in die Steckkupplungsdichtung eingeschoben ist;
- Fig. 7: eine schematische Detailansicht in Schnittdarstellung einer innenliegenden Oberfläche der Steckkupplungsdichtung mit rechteckigen Strukturelementen;
- Fig. 8: eine schematische Detailansicht in Schnittdarstellung einer innenliegenden Oberfläche der Steckkupplungsdichtung mit spitz zulaufenden Strukturelementen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

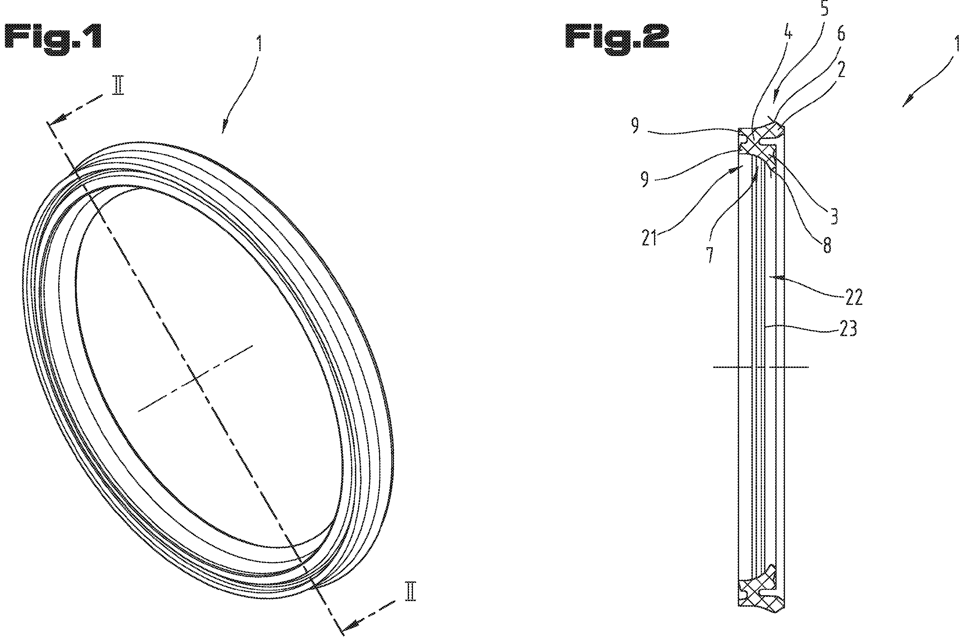

Fig. 1 zeigt, eine Draufsicht auf ein erstes Ausführungsbeispiel einer unverbauten Steckkupplungsdichtung 1, welche als Dichtungsring ausgeführt ist. Bevor im Detail auf die erfindungsgemäßen Ausführungsbeispiele eingegangen wird, sei darauf hingewiesen, dass die erfindungsgemäße Steckkupplungsdichtung 1 nicht nur ringförmig bzw. rotationssymmetrisch ausgebildet sein kann, sondern je nach Ausgestaltung der miteinander zu verbindenden und gegeneinander abzudichtenden Bauteile an deren Form angepasst sein kann. Somit kann die Steckkupplungsdichtung 1 beispielsweise auch eine rechteckige, eine ovale oder eine sonstige Form aufweisen.

Fig. 2 zeigt einen Schnitt entlang der in Fig. 1 eingezeichneten Schnittlinie II-II.

Wie aus Fig. 2 ersichtlich, kann vorgesehen sein, dass die Steckkupplungsdichtung 1 eine erste Dichtlippe 2 und eine zweite Dichtlippe 3 aufweist, welche in einer Dichtlippenbasis 4 miteinander verbunden sind.

Weiters ist vorgesehen, dass an der Steckkupplungsdichtung 1 eine außenliegende Oberfläche 5 ausgebildet ist. Insbesondere kann vorgesehen sein, dass die erste Dichtlippe 2 einen Teil der außenliegenden Oberfläche 5 bildet, wobei an der ersten Dichtlippe 2 eine erste Dichtfläche 6 ausgebildet sein kann.

Außerdem ist vorgesehen, dass an der Steckkupplungsdichtung 1 eine innenliegende Oberfläche 7 ausgebildet ist. Insbesondere kann vorgesehen sein, dass die zweite Dichtlippe 3 einen Teil der innenliegenden Oberfläche 7 bildet, wobei an der zweiten Dichtlippe 3 eine zweite Dichtfläche 8 ausgebildet sein kann.

Weiters kann vorgesehen sein, dass die Steckkupplungsdichtung 1 auf der von den Dichtlippen 2, 3 abgewandten Seite der Dichtlippenbasis 4 jeweils eine Schmutzlippe 9 aufweist. Diese Schmutzlippen 9 dienen dazu, zu verhindern, dass Schmutz von außen in den Bereich der Dichtflächen 6, 8 eindringen kann.

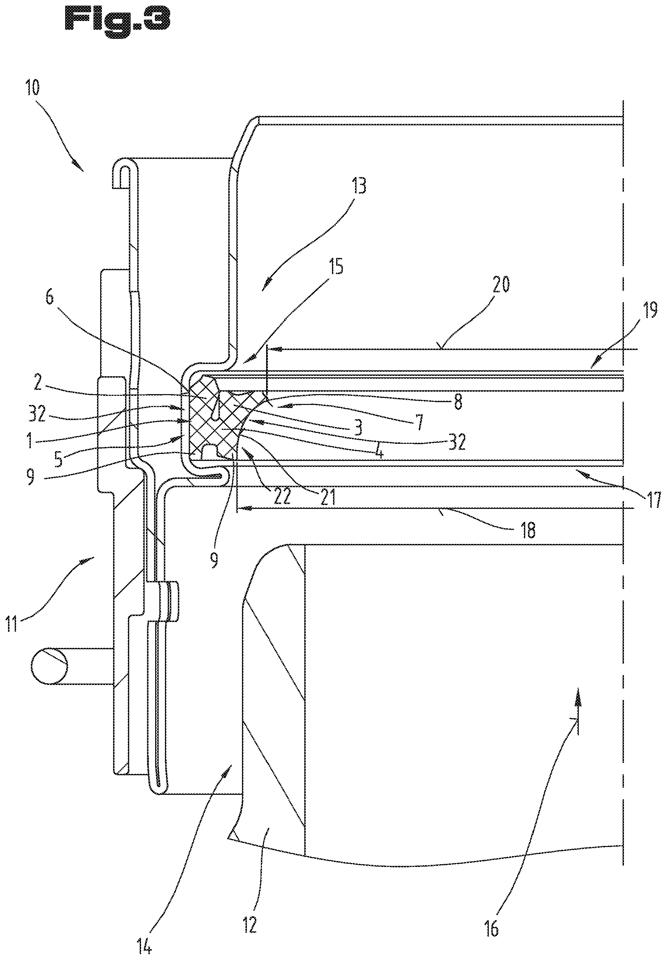

Fig. 3 zeigt in einer Schnittdarstellung ein Ausführungsbeispiel einer Steckkupplung 10, welche vorzugsweise in einem Luftansaugstrang eines Kraftfahrzeuges mit einem Verbrennungsmotor verbaut ist. Die Steckkupplung 10 dient insbesondere zum kuppelbaren Verbinden von zwei Luftschläuchen im Luftansaugstrang. Die Steckkupplung 10 kann beispielsweise zur Verbindung von zwei Luftschläuchen in einem Ansaugbereich vor einem Turbolader, oder zur Verbindung von zwei Luftschläuchen in einem Druckbereich zwischen dem Turbolader und dem Verbrennungsmotor dienen. Beispielsweise kann die Steckkupplung 10 zum Anschluss eines Luftschlauches an den Turbolader dienen.

Weiters kann auch vorgesehen sein, dass die Steckkupplung 10 beispielsweise in einer Kühlwasserleitung, einer Ölleitung, oder einer sonstigen Medienleitung in einem Kraftfahrzeug eingesetzt wird.

Die Steckkupplung 10 umfasst ein erstes Kupplungsteil 11 und ein zweites Kupplungsteil 12, wobei im verbauten Zustand die Steckkupplungsdichtung 1 zwischen den beiden Kupplungsteilen 11, 12 aufgenommen ist und diese abdichtet.

Insbesondere kann vorgesehen sein, dass die Steckkupplungsdichtung 1, im ersten Kupplungsteil 11 aufgenommen ist. Das zweite Kupplungsteil 12, kann zum Einstecken in das erste Kupplungsteil 11 ausgebildet sein. Insbesondere ist dabei vorgesehen, dass die Steckkupplungsdichtung 1 zwischen einer Innenseite 13 des ersten Kupplungsteils 11 und einer Außenseite 14 des zweiten Kupplungsteils 12 angeordnet ist und zum Abdichten der beiden Kupplungsteile 11, 12 dient.

Vorzugsweise ist vorgesehen, dass an der Innenseite 13 des ersten Kupplungsteils 11 eine Nut 15 ausgebildet ist, in welcher die Steckkupplungsdichtung 1 aufgenommen ist. Insbesondere wirkt die außenliegende Oberfläche 5 der Steckkupplungsdichtung 1 mit der Nut 15 zusammen.

In Fig. 3 befinden sich die Kupplungsteile 12, 13 in einer noch nicht gefügten Stellung, wobei sich die Steckkupplungsdichtung 1 hierbei in ihrer Grundstellung befindet. Die beiden Kupplungsteile 12, 13, welche miteinander zu verbinden und gegeneinander abzudichten sind, sind im gezeigten Ausführungsbeispiel rohrförmig ausgebildet. Konkret handelt es sich beim ersten Kupplungsteil 11 um eine Buchse und beim zweiten Kupplungsteil 12 um ein korrespondierendes männliches Gegenstück einer steckbaren Rohrverbindung. Das erste Kupplungsteil 11 ist in diesem Ausführungsbeispiel als Blechformteil ausgeführt, wobei die Nut 15 in diesem Blechformteil ausgebildet ist.

Die Nut 15 sichert die Steckkupplungsdichtung 1 in ihrer Position, wenn das als männliche Gegenstück ausgeführte zweite Kupplungsteil 12 in Einsteckrichtung 16 in das erste Kupplungsteil 11 eingeschoben wird. Die Position der Steckkupplungsdichtung 1 wird hierbei dadurch gesichert, dass die Steckkupplungsdichtung 1 in der Nut 15 formschlüssig aufgenommen ist.

Weiters kann vorgesehen sein, dass die Steckkupplungsdichtung 1 ein erstes Längsende 17 mit einem ersten Durchmesser 18 und ein zweites Längsende 19 mit einem zweiten Durchmesser 20 aufweist, wobei der zweite Durchmesser 20 kleiner ist als der erste Durchmesser 18. Weiters kann an der innenliegenden Oberfläche 7 ein Übergangsradius 21 ausgebildet sein, welcher sich zwischen dem ersten Längsende 17 der Steckkupplungsdichtung 1 und dem zweiten Längsende 19 der Steckkupplungsdichtung 1 erstreckt. Mit anderen Worten ausgedrückt weist auch die Steckkupplungsdichtung 1 eine Einsteckrichtung 16 auf.

Insbesondere ist vorgesehen, dass das erste Längsende 17 mit dem ersten Durchmesser 18 in Einsteckrichtung 16 gesehen vor dem zweiten Längsende 19 mit dem zweiten Durchmesser 20 angeordnet ist. Wenn die Steckkupplungsdichtung 1 richtig im ersten Kupplungsteil 11 angeordnet ist, stimmt die Einsteckrichtung 16 des ersten Kupplungsteils 11 mit der Einsteckrichtung 16 der Steckkupplungsdichtung 1 überein. In diesem Fall wird beim Fügen der beiden Kupplungsteile 11, 12 das zweite Kupplungsteil 12 vom ersten Längsende 17 her in die Steckkupplungsdichtung 1 eingeschoben.

In der noch nicht gefügten Stellung gemäß Fig. 3, liegt die Steckkupplungsdichtung 1 mit ihrer Dichtfläche 6 der ersten Dichtlippe 2 bereits am ersten Kupplungsteil 11 an, während die zweite Dichtlippe 3 nicht am zweiten Kupplungsteil 12 anliegt.

Beim Einbau der Steckkupplungsdichtung 1 in den ersten Kupplungsteil 11, insbesondere in die Nut 15 wird die Steckkupplungsdichtung 1 soweit verformt und zusammengedrückt bis die runde Umfangsform dermaßen verkleinert und zusammengedrückt ist, sodass die Stecckupplungsdichtung 1 in die Nut 15 eingesetzt werden kann. Am Ende dieses Einbauvorganges kann sich die Steckkupplungsdichtung 1 in der Nut 15 liegend wieder entspannen und annähernd in ihren völlig unbelasteten Ausgangszustand zurückverformen. Die erste Dichtlippe 2 bleibt hierbei leicht verformt und schmiegt sich mit ihrer Dichtfläche 6 an den ersten Kupplungsteil 11, sodass dieser von der Steckkupplungsdichtung 1 vollumfänglich berührt wird. Die hierzu nötige Kraft um die Dichtfläche 6 an den ersten Kupplungsteil 11 anpressen zu können wird durch in der Steckkupplungsdichtung 1 aufgrund der Verformung hervorgerufene Eigenspannungen erreicht.

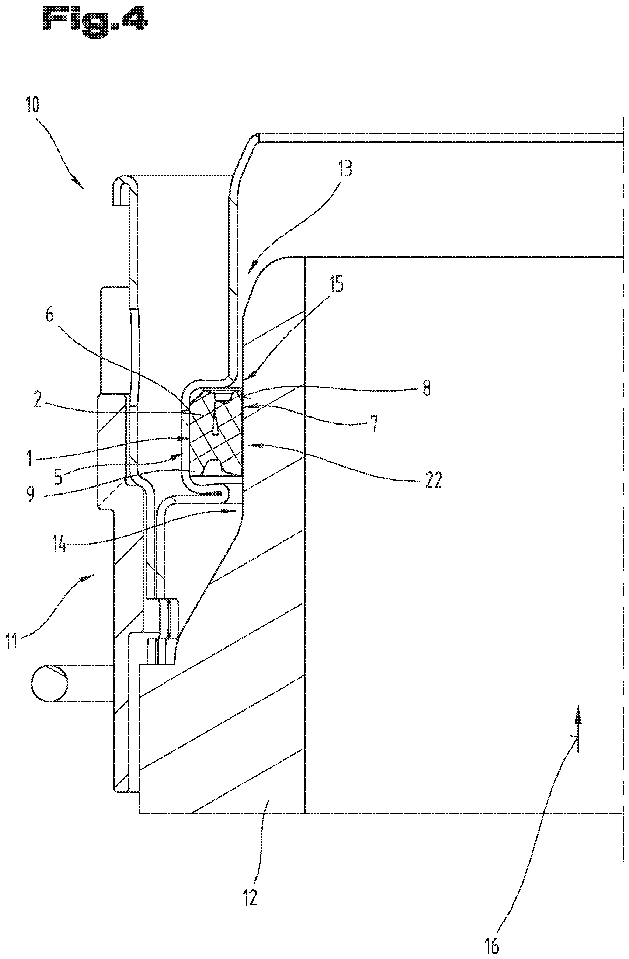

Fig. 4 zeigt die Steckkupplungsdichtung 1 in ihrer Arbeitsstellung, wobei die beiden Kupplungsteile 11, 12 unter Zwischenschaltung der Steckkupplungsdichtung 1 miteinander verbunden sind. Für gleiche Teile werden gleiche Bezugszeichen bzw. Bauteilbezeichnungen wie in den vorangegangenen Figuren verwendet. Um unnötige Wiederholungen zu vermeiden, wird auf die detaillierte Beschreibung in den vorangegangenen Figuren hingewiesen bzw. Bezug genommen.

Beim Einschieben des zweiten Kupplungsteils 12 in das erste Kupplungsteil 11 wird ausgehend von der Stellung gemäß der Fig. 3 die zweite Dichtlippe 3 der Steckkupplungsdichtung 1 mittels dem zweiten Kupplungsteil 12 in Richtung zur ersten Dichtlippe 2 gedrückt. Dabei gleitet die Außenseite 14 des zweiten Kupplungsteils 12 an der innenliegenden Oberfläche 7 der Steckkupplungsdichtung 1 entlang.

Am Ende des Fügevorganges der Kupplungsteile 11, 12 ist die Steckkupplungsdichtung 1 vollständig verformt, sodass sie ihre Arbeitsstellung erreicht hat, welche in Fig. 4 dargestellt ist.

Bei herkömmlichen Steckkupplungsdichtungen kann es hierbei vorkommen, dass die Fügekraft, welche zum Fügen der Kupplungsteile 11, 12 benötigt wird sehr groß ist. Durch die in der folgenden Beschreibung erläuterten Maßnahmen kann erreicht werden, dass die Außenseite 14 des zweiten Kupplungsteils 12 erleichtert an der innenliegenden Oberfläche 7 der Steckkupplungsdichtung 1 entlanggleitet und somit die notwendige Fügekraft vermindert wird.

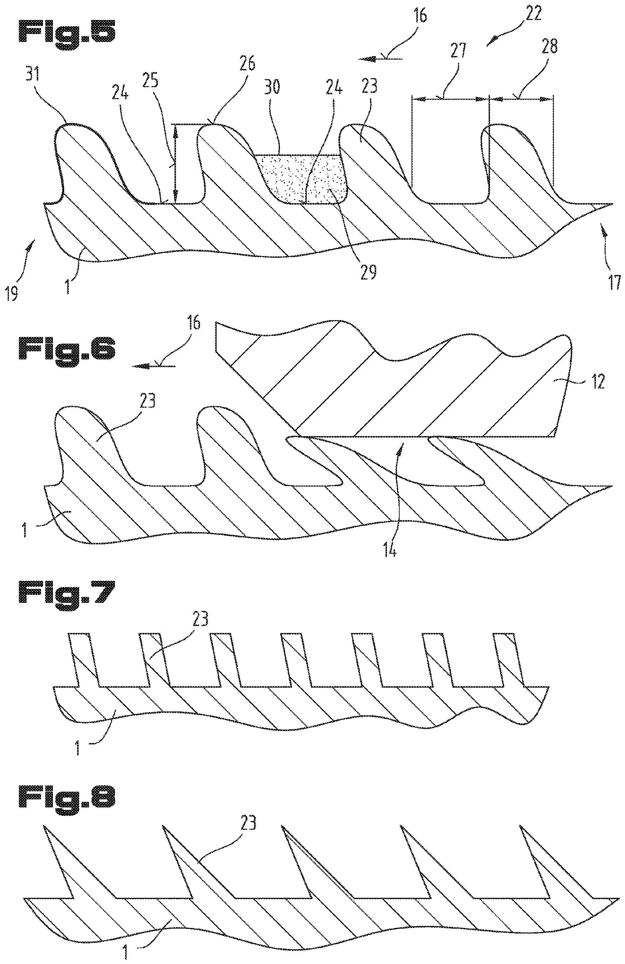

Das Vermindern der Fügekraft kann insbesondere dadurch erreicht werden, dass an einer Anlagefläche 32, insbesondere an der innenliegenden Oberfläche 7, der Steckkupplungsdichtung 1 eine Mikrostrukturierung 22, wie sie in den Figuren 5 bis 8 gezeigt ist, ausgebildet ist. Die Mikrostrukturierung 22 umfasst zumindest ein oder mehrere Strukturierungselemente 23, welche gegenüber einer Basisoberfläche 24 vorstehend ausgebildet sind. Natürlich kann bei andersartig ausgebildeten Steckkupplungsdichtungen 1 die Anlagefläche 32 auch anderorts an der Steckkupplungsdichtung 1 angeordnet sein.

Die Strukturierungselemente 23 können, wie besonders gut in Fig. 2 ersichtlich, in Form von vollumfänglich umlaufenden Rippen ausgebildet sein. Diese Rippen können insbesondere durch eine entsprechende Spritzgussform mit entsprechenden Ausnehmungen hergestellt werden. Eine Höhe 25 des Strukturierungselementes 23 wird durch den Abstand zwischen der Basisoberfläche 24 und einer Spitzenfläche 26 des Strukturierungselementes 23 definiert.

Ein Freiraum 27 zwischen den Strukturierungselementen 23 wird vorzugsweise nahe der Basisoberfläche 24 gemessen. Der Freiraum 27 definiert den zwischenliegenden Abstand zweier Strukturierungselemente 23 zueinander. Durch Ausbildung des Freiraumes 27 können die einzelnen Strukturierungselemente 23 verformt werden.

Eine Breite 28 des Strukturierungselementes 23 wird vorzugsweise ebenfalls nahe der Basisoberfläche 24 gemessen.

Das Strukturierungselement 23 kann wie aus Fig. 5 ersichtlich, von der Basisoberfläche 24 bzw. vom Fuß zur Spitzenfläche 26 bzw. Kopf hin verjüngend ausgebildet sein. Mit anderen Worten ausgedrückt, kann die Breite 28 des Strukturierungselementes 23 an der Basisoberfläche 24 bzw. Fuß größer sein als an der Spitzenfläche 26 bzw. Kopf.

Wie aus Fig. 5 weiters ersichtlich, kann vorgesehen sein, dass die Strukturierungselemente 23 in Einsteckrichtung 16 gebogen sind bzw. die Spitzenfläche 26 gegenüber der Basisoberfläche 24 in Einsteckrichtung 16 verschoben ist. Mit anderen Worten ausgedrückt, dass der Kopfbereich der Strukturierungselemente 23 weiter in Einsteckrichtung 16 verlagert ist, als ein Fußbereich der Strukturierungselemente 23. Dadurch kann erreicht werden, dass beim Einstecken des zweiten Kupplungsteiles 12 in die Steckkupplungsdichtung 1 sich die Strukturierungselemente 23 weiter in Richtung Einsteckrichtung 16 umlegen können.

Weiters kann vorgesehen sein, dass im Freiraum zwischen den einzelnen Strukturierungselementen 23 ein Gleitmittel 29 angeordnet ist, welches dazu dient um das Einführen des ersten Kupplungsteils 11 in die Steckkupplungsdichtung 1 weiter zu erleichtern. Weiters kann eine Versiegelung 30 ausgebildet sein, mittels welcher das Gleitmittel 29 in Position gehalten wird bzw. vor Austrocknung geschützt wird. Wenn das zweite Kupplungsteil 12 in die Steckkupplungsdichtung 1 eingeschoben wird, kann die Versiegelung 30 aufplatzen und dadurch das Gleitmittel 29 freigesetzt werden und somit zur Schmierung dienen.

In einer alternativen Ausführungsvariante kann auch vorgesehen sein, dass die Mikrostrukturierung 22, beispielsweise durch auftragen, auf die innenliegende Oberfläche 7 der Stecckupplungsdichtung 1 aufgebracht wird.

In einer weiteren Ausführungsvariante kann auch vorgesehen sein, dass an den Strukturierungselementen 23 und/oder an der Basisoberfläche 24 eine Beschichtung 31 ausgebildet ist, durch welche das Gleitverhalten der Mikrostrukturierung 22 weiter verbessert werden kann.

Die Beschichtung 31 kann natürlich an der gesamten Oberfläche der Steckkupplungsdichtung 1 ausgebildet sein.

In der Fig. 6 ist der Einschiebevorgang des zweiten Kupplungsteils 12 in die Steckkupplungsdichtung 1 dargestellt, wobei der zweite Kupplungsteil 12 schon teilweise in die Steckkupplungsdichtung 1 eingeschoben ist und daher die Strukturierungselemente 23 der Mikrostrukturierung 22 teilweise umgebogen sind. Durch das Umbiegen der Strukturierungselemente 23 wird der Einschiebevorgang erleichtert.

In der Fig. 7 ist eine weitere und gegebenenfalls für sich eigenständige Ausführungsform der Mikrostrukturierung 22 gezeigt, wobei wiederum für gleiche Teile gleiche Bezugszeichen bzw. Bauteilbezeichnungen wie in den vorangegangenen Figuren 5 und 6 verwendet werden. Um unnötige Wiederholungen zu vermeiden, wird auf die detaillierte Beschreibung in den vorangegangenen Figuren 5 und 6 hingewiesen bzw. Bezug genommen.

Wie aus Fig. 7 ersichtlich, kann vorgesehen sein, dass die Strukturierungselemente 23 über dessen Höhe gesehen eine annähernd gleich große Breite 28 aufweisen. Insbesondere kann vorgesehen sein, dass die Strukturierungselemente 23 in etwa rechteckförmig ausgebildet sind.

In der Fig. 8 ist eine weitere und gegebenenfalls für sich eigenständige Ausführungsform der Mikrostrukturierung 22 gezeigt, wobei wiederum für gleiche Teile gleiche Bezugszeichen bzw. Bauteilbezeichnungen wie in den vorangegangenen Figuren 5 bis 7 verwendet werden. Um unnötige Wiederholungen zu vermeiden, wird auf die detaillierte Beschreibung in den vorangegangenen Figuren 5 bis 7 hingewiesen bzw. Bezug genommen.

Wie aus Fig. 8 ersichtlich, kann vorgesehen sein, dass die Strukturierungselemente 23 über dessen Höhe gesehen eine abnehmende Breite 28 aufweisen. Insbesondere kann vorgesehen sein, dass die Strukturierungselemente 23 spitz zulaufend ausgebildet sind.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Steckkupplungsdichtung | 30 | Versiegelung |
| 2 | erste Dichtlippe | 31 | Beschichtung |
| 3 | zweite Dichtlippe | 32 | Anlagefläche |
| 4 | Dichtlippenbasis | | |
| 5 | außenliegende Oberfläche | | |
| 6 | Dichtfläche erste Dichtlippe | | |
| 7 | innenliegende Oberfläche | | |
| 8 | Dichtfläche zweite Dichtlippe | | |
| 9 | Schmutzlippe | | |
| 10 | Steckkupplung | | |
| 11 | erstes Kupplungsteil | | |
| 12 | zweites Kupplungsteil | | |
| 13 | Innenseite erstes Kupplungsteil | | |
| 14 | Außenseite zweites Kupplungsteil | | |
| 15 | Nut | | |
| 16 | Einsteckrichtung | | |
| 17 | erstes Längsende | | |
| 18 | erster Durchmesser | | |
| 19 | zweites Längsende | | |
| 20 | zweiter Durchmesser | | |
| 21 | Übergangsradius | | |
| 22 | Mikrostrukturierung | | |
| 23 | Strukturierungselement | | |
| 24 | Basisoberfläche | | |
| 25 | Höhe Strukturierungselement | | |
| 26 | Spitzenfläche | | |
| 27 | Freiraum zwischen Strukturierungselementen | | |
| 28 | Breite Strukturierungselement | | |
| 29 | Gleitmittel | | |

## Patentansprüche

1. Steckkupplungsdichtung (1) für eine Medienleitung eines Antriebsmotors, wobei die Steckkupplungsdichtung (1) zur Aufnahme zwischen einem ersten Kupplungsteil (11) und einem in Einsteckrichtung (16) in das erste Kupplungsteil (11) einzuschiebende zweite Kupplungsteil (12) ausgebildet ist und wobei die Steckkupplungsdichtung (1) eine Anlagefläche (32) aufweist, welche zur Anlage am ersten Kupplungsteil (11) und/oder am zweiten Kupplungsteil (12) ausgebildet ist, wobei an der Anlagefläche (32) zumindest bereichsweise eine Mikrostrukturierung (22) mit vorstehenden Strukturierungselementen (23) zur Reduktion des Fügewiderstandes der beiden Kupplungsteile (11, 12) ausgebildet ist, **dadurch gekennzeichnet, dass** die vorstehenden Strukturierungselemente (23) der Mikrostrukturierung (22) in Einsteckrichtung (16) gebogen ausgebildet sind, wobei ein Kopfbereich der Strukturierungselemente (23) weiter in Einsteckrichtung (16) verlagert ist, als ein Fußbereich der Strukturierungselemente (23).

2. Steckkupplungsdichtung nach Anspruch 1, **dadurch gekennzeichnet, dass** eine außenliegende Oberfläche (5) zur Aufnahme in einem ersten Kupplungsteil (11) ausgebildet ist und eine innenliegende Oberfläche (7) zur Anlage an einem in Einsteckrichtung (16) in das erste Kupplungsteil (11) einzuschiebende zweiten Kupplungsteil (12) ausgebildet ist, wobei an der innenliegenden Oberfläche (7) die Mikrostrukturierung (22) mit den vorstehenden Strukturierungselementen (23) zur Reduktion des Fügewiderstandes der beiden Kupplungsteile (11, 12) ausgebildet ist.

3. Steckkupplungsdichtung nach Anspruch 1 oder 2, **dadurch gekennzeichnet, dass** die vorstehenden Strukturierungselemente (23) der Mikrostrukturierung (22) in Form von mehreren zumindest teilweise, insbesondere vollumfänglich, umlaufenden Rippen gebildet sind.

4. Steckkupplungsdichtung nach einem der vorhergehenden Ansprüche, **dadurch gekennzeichnet, dass** die vorstehenden Strukturierungselemente (23) eine Höhe (25) zwischen 10µm und 900µm, insbesondere zwischen 40µm und 400µm, bevorzugt zwischen 80µm und 200µm aufweisen.

5. Steckkupplungsdichtung nach einem der vorhergehenden Ansprüche, **dadurch gekennzeichnet, dass** zwischen den vorstehenden Strukturierungselementen (23) ein Freiraum (27) zwischen 10µm und 900µm, insbesondere zwischen 40µm und 400µm, bevorzugt zwischen 100µm und 200µm ausgebildet ist.

6. Steckkupplungsdichtung nach einem der vorhergehenden Ansprüche, **dadurch gekennzeichnet, dass** die vorstehenden Strukturierungselemente (23) eine Breite (28) zwischen 5µm und 300µm, insbesondere zwischen 10µm und 200µm, bevorzugt zwischen 30µm und 100µm aufweisen.

7. Steckkupplungsdichtung nach einem der vorhergehenden Ansprüche, **dadurch gekennzeichnet, dass** zwischen den vorstehenden Strukturierungselementen (23) ein Gleitmittel (29) angeordnet ist.

8. Steckkupplungsdichtung nach einem der vorhergehenden Ansprüche, **dadurch gekennzeichnet, dass** mehrere vorstehende Strukturierungselemente (23) wellenartig hintereinander angeordnet sind.

9. Steckkupplungsdichtung nach einem der Ansprüche 2 bis 8, **dadurch gekennzeichnet, dass** die innenliegende Oberfläche (7) der Steckkupplungsdichtung (1), an welcher die vorstehenden Strukturierungselemente (23) angeordnet sind sich zwischen einem ersten Längsende (17) der Steckkupplungsdichtung (1) mit einem ersten Durchmesser (18) und einem zweiten Längsende (19) der Steckkupplungsdichtung (1) mit einem zweiten Durchmesser (20) erstreckt, wobei der zweite Durchmesser (20) kleiner ist als der erste Durchmesser (18) und an der innenliegenden Oberfläche (7) ein Übergangsradius (21) ausgebildet ist, welcher sich zwischen dem ersten Längsende (17) der Steckkupplungsdichtung (1) und dem zweiten Längsende (19) der Steckkupplungsdichtung (1) erstreckt.

10. Steckkupplungsdichtung nach einem der vorhergehenden Ansprüche, **dadurch gekennzeichnet, dass** zumindest an der Anlagefläche (32) eine Beschichtung (31) ausgebildet ist, durch welche das Gleitverhalten der Mikrostrukturierung (22) weiter verbessert werden kann.

11. Steckkupplungsdichtung nach einem der vorhergehenden Ansprüche, **dadurch gekennzeichnet, dass** in der Steckkupplungsdichtung (1) Hohlräume ausgebildet sind in welchen ein Gleitmittel (29) angeordnet ist.

12. Kraftfahrzeug umfassend: einen Antriebsmotor, einen Luftansaugstrang des Antriebsmotors und eine Steckkupplung (10) im Luftansaugstrang des Antriebsmotors, wobei die Steckkupplung (10) ein erstes Kupplungsteil (11) mit einer darin aufgenommenen Stecckupplungsdichtung (1) und ein in das erste Kupplungsteil (11) eingestecktes zweites Kupplungsteil (12) aufweist, **dadurch gekennzeichnet, dass** die Steckkupplungsdichtung (1) nach einem der vorhergehenden Ansprüche ausgebildet ist.

## Claims

1. A plug-in coupling seal (1) for a fluid line of a drive motor, wherein the plug-in coupling seal (1) is formed for accommodation between a first coupling part (11) and a second coupling part (12) to be pushed into the first coupling part (11) in an insertion direction (16) and wherein the plug-in coupling seal (1) has a contact surface (32), which is formed for contact against the first coupling part (11) and/or against the second coupling part (12), wherein, at least in some regions, a microstructuring (22) with protruding structuring elements (23) for reducing the resistance of the two coupling parts (11, 12) to joining is formed on the contact surface (32), **characterized in that** the protruding structuring elements (23) of the micro structuring (22) are formed to be bent in the insertion direction (16), wherein a head region of the structuring elements (23) is shifted further in the insertion direction (16) than a foot region of the structuring element (23).

2. The plug-in coupling seal according to claim 1, **characterized in that** an outer surface (5) is formed for accommodation in a first coupling part (11) and an inner surface (7) is formed for contact against a second coupling part (12) to be pushed into the first coupling part (11) in the insertion direction (16), wherein the microstructuring (22) having the protruding structuring elements (23) for reduction of the resistance of the two coupling parts (11, 12) to joining is formed on the inner surface (7).

3. The plug-in coupling seal according to claim 1 or 2, **characterized in that** the protruding structuring elements (23) of the microstructuring (22) are designed in the form of multiple at least partly, in particular completely, circumferential ribs.

4. The plug-in coupling seal according to one of the preceding claims, **characterized in that** the protruding structuring elements (23) have a height (25) of between 10 µm and 900 µm, in particular between 40 µm and 400 µm, preferably between 80 µm and 200 µm.

5. The plug-in coupling seal according to one of the preceding claims, **characterized in that** a free space (27) of between 10 µm and 900 µm, in particular between 40 µm and 400 µm, preferably between 100 µm and 200 µm is formed between the protruding structuring elements (23).

6. The plug-in coupling seal according to one of the preceding claims, **characterized in that** the protruding structuring elements (23) have a width (28) of between 5 µm and 300 µm, in particular between 10 µm and 200 µm, preferably between 30 µm and 100 µm.

7. The plug-in coupling seal according to one of the preceding claims, **characterized in that** a lubricant (29) is arranged between the protruding structuring elements (23).

8. The plug-in coupling seal according to one of the preceding claims, **characterized in that** multiple protruding structuring elements (23) are arranged one after the other in wavy manner.

9. The plug-in coupling seal according to one of claims 2 to 8, **characterized in that** the inner surface (7) of the plug-in coupling seal (1), on which the protruding structuring elements (23) are arranged, extends between a first longitudinal end (17) of the plug-in coupling seal (1) having a first diameter (18) and a second longitudinal end (19) of the plug-in coupling seal (1) having a second diameter (20), wherein the second diameter (20) is smaller than the first diameter (18) and a transition radius (21), which extends between the first longitudinal end (17) of the plug-in coupling seal (1) and the second longitudinal end (19)of the plug-in coupling seal (1), is formed on the inner surface (7).

10. The plug-in coupling seal according to one of the preceding claims, **characterized in that** a coating (31), by which the sliding behavior of the microstructuring (22) can be further improved, is formed at least on the contact surface (32).

11. The plug-in coupling seal according to one of the preceding claims, **characterized in that** cavities, in which a lubricant (29) is arranged, are formed in the plug-in coupling seal (1).

12. A motor vehicle comprising: a drive motor, an air-intake line of the drive motor and a plug-in coupling (10) in the air-intake line of the drive motor, wherein the plug-in coupling (10) has a first coupling part (11) having a plug-in coupling seal (1) received therein and a second coupling part (12) inserted into the first coupling part (11), **characterized in that** the plug-in coupling seal (1) is formed according to one of the preceding claims.

## Revendications

1. Joint d'étanchéité de raccord enfichable (1) pour une conduite de fluide d'un moteur d'entraînement, dans lequel le joint d'étanchéité de raccord enfichable (1) est conçu pour être logé entre une première partie de raccord (11) et une deuxième partie de raccord (12), à coulisser dans la direction d'enfichage (16), dans la première partie de raccord (11), et dans lequel le joint d'étanchéité de raccord enfichable (1) comprend une surface d'appui (32) qui est conçue pour l'appui contre une première partie de raccord (11) et/ou une deuxième partie de raccord (12), dans lequel, sur la surface d'appui (32), au moins à certains endroits, une micro-structuration (22) est réalisée avec des éléments de structuration en saillie (23) pour la réduction de la résistance à l'assemblage des deux parties de raccord (11, 12), **caractérisé en ce que** les éléments de structuration en saillie (23) de la micro-structuration (22) sont réalisés de manière fléchie dans la direction d'enfichage (16), dans lequel une zone de tête des éléments de structuration (23) est déplacée plus loin dans la direction d'enfichage (16) qu'une zone de pied des éléments de structuration (23).

2. Joint d'étanchéité de raccord enfichable (1) selon la revendication 1, **caractérisé en ce qu'**une surface externe (5) est conçue pour le logement dans une première partie de raccord (11) et une surface interne (7) est conçue pour l'appui contre une deuxième partie de raccord (12) à coulisser, dans la direction d'enfichage (16), dans la première partie de raccord (11), dans lequel, sur la surface interne (7), la micro-structuration (22) avec les éléments de structuration en saillie (23) est conçue pour la réduction de la résistance à l'assemblage des deux parties de raccord (11, 12).

3. Joint d'étanchéité de raccord enfichable (1) selon la revendication 1 ou 2, **caractérisé en ce que** les éléments de structuration en saillie (23) de la micro-structuration (22) sont conçus sous la forme de plusieurs nervures au moins partiellement périphériques, de préférence sur toute la circonférence.

4. Joint d'étanchéité de raccord enfichable (1) selon l'une des revendications précédentes, **caractérisé en ce que** les éléments de structuration en saillie (23) présentent une hauteur (25) entre 10 µm et 900 µm, plus particulièrement entre 40 µm et 400 µm, de préférence entre 80 µm et 200 µm.

5. Joint d'étanchéité de raccord enfichable (1) selon l'une des revendications précédentes, **caractérisé en ce que**, entre les éléments de structuration en saillie (23), un espace libre (27) entre 10 µm et 900 µm, plus particulièrement entre 40 µm et 400 µm, de préférence entre 100 µm et 200 µm, est réalisé.

6. Joint d'étanchéité de raccord enfichable (1) selon l'une des revendications précédentes, **caractérisé en ce que** les éléments de structuration en saillie (23) présentent une largeur (28) entre 5 µm et 300 µm, plus particulièrement entre 10 µm et 200 µm, de préférence entre 30 µm et 100 µm.

7. Joint d'étanchéité de raccord enfichable (1) selon l'une des revendications précédentes, **caractérisé en ce que**, entre les éléments de structuration en saillie (23) est disposé un lubrifiant (29).

8. Joint d'étanchéité de raccord enfichable (1) selon l'une des revendications précédentes, **caractérisé en ce que** plusieurs éléments de structuration en saillie (23) sont disposés les uns derrière les autres comme des ondulations.

9. Joint d'étanchéité de raccord enfichable (1) selon l'une des revendications 2 à 8, **caractérisé en ce que** la surface interne (7) du joint d'étanchéité de raccord enfichable (1), sur laquelle les éléments de structuration en saillie (23) sont disposés, s'étend entre une première extrémité longitudinale (17) du joint d'étanchéité de raccord enfichable (1), avec un premier diamètre (18), et une deuxième extrémité longitudinale (19) du joint d'étanchéité de raccord enfichable (1), avec un deuxième diamètre (20), dans lequel le deuxième diamètre (20) est inférieur au premier diamètre (18) et, sur la surface interne (7), est réalisé un rayon de transition (21) qui s'étend entre la première extrémité longitudinale (17) du joint d'étanchéité de raccord enfichable (1) et la deuxième extrémité longitudinale (19) du joint d'étanchéité de raccord enfichable (1).

10. Joint d'étanchéité de raccord enfichable (1) selon l'une des revendications précédentes, **caractérisé en ce que**, au moins sur la surface d'appui (32), est réalisé un revêtement (31) permettant d'améliorer encore les propriétés de glissement de la micro-structuration (22).

11. Joint d'étanchéité de raccord enfichable (1) selon l'une des revendications précédentes, **caractérisé en ce que**, dans le joint d'étanchéité de raccord enfichable (1), sont réalisés des espaces creux dans lesquels un lubrifiant (29) est disposé.

12. Véhicule automobile comprenant : un moteur d'entraînement, un dispositif d'aspiration d'air du moteur d'entraînement et un raccord enfichable (10) dans le dispositif d'aspiration d'air du moteur d'entraînement, dans lequel le raccord enfichable (10) comprend une première partie de raccord (11) avec un joint d'étanchéité de raccord enfichable (1) logé à l'intérieur et une deuxième partie de raccord (12) enfichée dans la première partie de raccord (11), **caractérisé en ce que** le joint d'étanchéité de raccord enfichable (1) est conçu selon l'une des revendications précédentes.
